# EUROPEAN PATENT APPLICATION

(11) **EP 3 543 919 A1**
(43) Date of publication of application: **25.09.2019**
(21) Application number: 19164766.8
(22) Date of filing: 22.03.2019
(51) Int. Cl.: G06Q 10/00

(54) **SERVICE TOOL WITH CAPTURE AND REPLAY**

(30) Priority: 23.03.2018 US 201815933634
(71) Applicant: Otis Elevator Company, Farmington, Connecticut 06032 (US)
(72) Inventor: GINSBERG, David, Farmington, CT 06032 (US); WILLIAMS, Fred G., Farmington, CT 06032 (US)
(74) Representative: Dehns

(57) **Abstract**

A service tool for interfacing with an equipment system includes a processing system, a display, and a memory system having a plurality of instructions stored thereon that, when executed by the processing system, cause the service tool to establish communication with an equipment controller of the equipment system and capture a plurality of state samples of one or more equipment system parameters distributed over multiple sampling times as a plurality of captured data in a trace buffer of the service tool. The instructions when executed by the processing system cause the service tool to store the captured data from the trace buffer to one or more files in the memory system of the service tool and replay the captured data from the one or more files on the display of the service tool responsive to a replay request.

## Description

### BACKGROUND

The embodiments herein relate to equipment service tools and, more particularly, to service tools with data capture and replay for equipment systems.

Service tools can be used for accessing equipment controllers to monitor functions and performance in an equipment system, such as a conveyance system. Information transmitted from an equipment controller to a service tool can be displayed as current state data. The service tool provides a mechanic with the ability to see what is actively happening within an equipment system at a given moment based on data provided from the equipment controller.

### BRIEF SUMMARY

According to an embodiment, a service tool for interfacing with an equipment system includes a processing system, a display, and a memory system having a plurality of instructions stored thereon that, when executed by the processing system, cause the service tool to establish communication with an equipment controller of the equipment system and capture a plurality of state samples of one or more equipment system parameters distributed over multiple sampling times as a plurality of captured data in a trace buffer of the service tool. The instructions when executed by the processing system cause the service tool to store the captured data from the trace buffer to one or more files in the memory system of the service tool and replay the captured data from the one or more files on the display of the service tool responsive to a replay request.

In addition to one or more of the features described herein, or as an alternative, further embodiments include where the instructions when executed by the processing system cause the service tool to adjust a replay speed of the captured data responsive to a replay speed change request.

In addition to one or more of the features described herein, or as an alternative, further embodiments include where the replay speed is adjustable between replaying the state samples of one or more equipment system parameters at a rate slower than a sampling rate, at the sampling rate, faster than the sampling rate, and freezing a replay operation.

In addition to one or more of the features described herein, or as an alternative, further embodiments include where replaying the captured data includes outputting the state samples of one or more equipment system parameters as one or more of: a data value and a data plot.

In addition to one or more of the features described herein, or as an alternative, further embodiments include where the one or more equipment system parameters are selected based on one or more configuration files and one or more user selections.

In addition to one or more of the features described herein, or as an alternative, further embodiments include where the instructions when executed by the processing system cause the service tool to add metadata to the captured data in the one or more files indicating one or more system status values.

In addition to one or more of the features described herein, or as an alternative, further embodiments include where the instructions when executed by the processing system cause the service tool to transmit at least one of the files to the equipment controller or a remote system external to the service tool responsive to a data transmission request.

In addition to one or more of the features described herein, or as an alternative, further embodiments include where the instructions when executed by the processing system cause the service tool to determine whether a change in a data value occurred in the state samples between the sampling times, and prevent one or more of the state samples from being stored in the one or more files based on determining that the data value remained unchanged between the sampling times.

In addition to one or more of the features described herein, or as an alternative, further embodiments include where the instructions when executed by the processing system cause the service tool to set a trigger event associated with the one or more equipment system parameter, and initiate a save request to store the captured data based on determining that the trigger event has occurred.

In addition to one or more of the features described herein, or as an alternative, further embodiments include where the equipment controller is an elevator controller and the service tool is a mobile device configured to communicate wirelessly with the elevator controller.

According to an embodiment, a method includes establishing communication between a service tool and an equipment controller, and capturing a plurality of state samples of one or more equipment system parameters distributed over multiple sampling times as a plurality of captured data in a trace buffer of the service tool. The captured data from the trace buffer is stored to one or more files in a memory system of the service tool. The captured data is replayed from the one or more files on a display of the service tool responsive to a replay request.

The method may further comprise: adjusting a replay speed of the captured data responsive to a replay speed change request.

The replay speed may be adjustable between replaying the state samples of one or more equipment system parameters at a rate slower than a sampling rate, at the sampling rate, faster than the sampling rate, and freezing a replay operation.

Replaying the captured data may comprise outputting the state samples of one or more equipment system parameters as one or more of: a data value and a data plot.

The one or more equipment system parameters may be selected based on one or more configuration files and one or more user selections.

The method may further comprising: adding metadata to the captured data in the one or more files indicating one or more system status values.

The method may further comprise: transmitting at least one of the files to the equipment controller or a remote system external to the service tool responsive to a data transmission request.

The method may further comprise: determining whether a change in a data value occurred in the state samples between the sampling times; and preventing one or more of the state samples from being stored in the one or more files based on determining that the data value remained unchanged between the sampling times.

The method may further comprise: setting a trigger event associated with the one or more equipment system parameter; and initiating a save request to store the captured data based on determining that the trigger event has occurred.

The equipment controller may be an elevator controller and the service tool may be a mobile device configured to communicate wirelessly with the elevator controller.

Technical effects of embodiments of the present disclosure include efficient data capture and replay using a service tool operable to collect data from an equipment controller.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 is a schematic block diagram illustrating a system that may be configured in accordance with one or more embodiments of the present disclosure;
FIG. 3 is a schematic illustration of a system in accordance with an embodiment of the present disclosure;
FIG. 4A is a schematic illustration of a computing system of a service tool in accordance with an embodiment of the present disclosure;
FIG. 4B is a schematic illustration of a computing system of an elevator controller in accordance with an embodiment of the present disclosure;
FIG. 5A is a schematic illustration of a user interface on a service tool at a first time in a captured data sequence in accordance with an embodiment of the present disclosure;
FIG. 5B is a schematic illustration of a user interface on a service tool at a second time in a captured data sequence in accordance with an embodiment of the present disclosure;
FIG. 5C is a schematic illustration of a user interface on a service tool at a third time in a captured data sequence in accordance with an embodiment of the present disclosure;
FIG. 6A is a schematic illustration of a user interface on a service tool at a first time in a captured data sequence in accordance with an embodiment of the present disclosure;
FIG. 6B is a schematic illustration of a user interface on a service tool at a second time in a captured data sequence in accordance with an embodiment of the present disclosure;
FIG. 6C is a schematic illustration of a user interface on a service tool at a third time in a captured data sequence in accordance with an embodiment of the present disclosure;
FIG. 7A is a schematic illustration of a user interface on a service tool at a first time in a captured data sequence in accordance with an embodiment of the present disclosure;
FIG. 7B is a schematic illustration of a user interface on a service tool at a second time in a captured data sequence in accordance with an embodiment of the present disclosure;
FIG. 7C is a schematic illustration of a user interface on a service tool at a third time in a captured data sequence in accordance with an embodiment of the present disclosure; and
FIG. 8 illustrates a flow process in accordance with an embodiment of the present disclosure.

### DETAILED DESCRIPTION

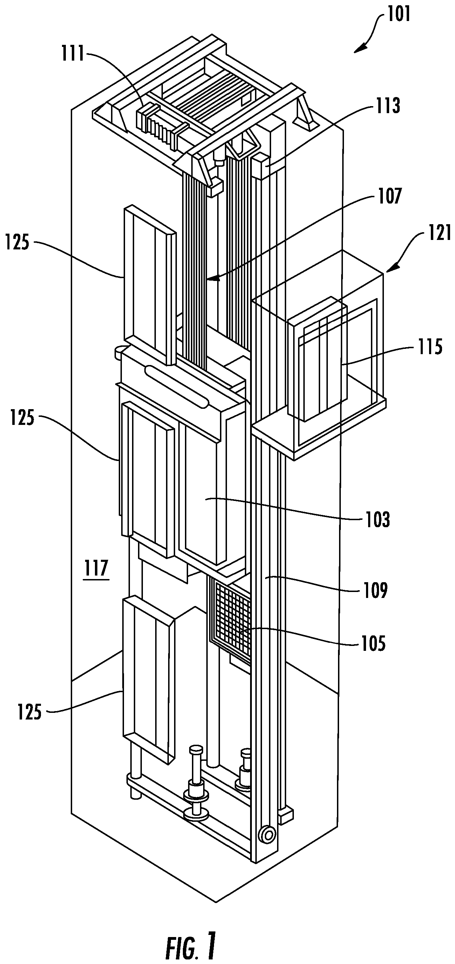

FIG. 1 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

In other embodiments, the system comprises a conveyance system that moves passengers between floors and/or along a single floor. Such conveyance systems, in addition to elevator systems, may include escalators, people movers, etc. Accordingly, embodiments described herein are not limited to elevator systems, such as that shown in Figure 1. Further, embodiments can be implemented for various types of equipment systems, such as heating, ventilation, and air conditioning (HVAC) systems, including conveyance systems and other such systems having a plurality of sensors and actuation subsystems.

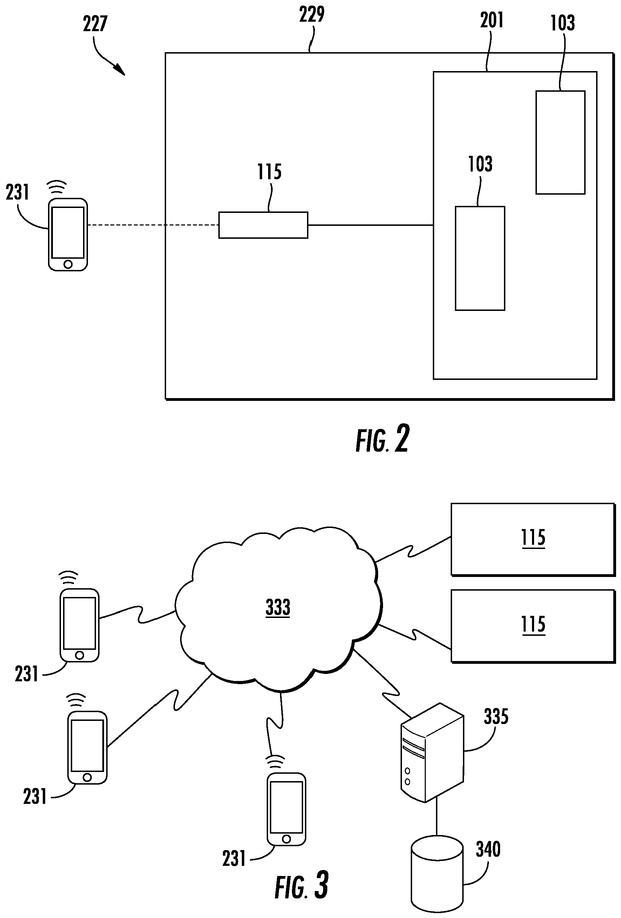

Turning now to FIG. 2, a schematic illustration of a building system 227 in an example embodiment of the present disclosure is shown. The building system 227 includes an elevator system 201 as an embodiment of the elevator system 101 of FIG. 1 installed within a structure 229 (e.g., a building). In some embodiments, the structure 229 may be an office building or a collection of office buildings that may or may not be physically located near each other. The structure 229 may include any number of floors that are accessible by the elevator system 201, and thus the structure 229 can include any number of landings (e.g., landings 125 as shown in FIG. 1). Persons entering the structure 229 may enter at a lobby floor and may travel to a destination floor via one or more elevator cars 103 that are part of the elevator system 201.

The elevator system 201 may include one or more computing devices, such as elevator controller 115. The elevator controller 115 and/or subcomponents of the elevator controller 115 can be located anywhere within the structure 229 and/or external to the structure 229, such as an off-site location or distributed between multiple computing resource (e.g., cloud-based). The elevator controller 115 may be configured to control dispatching operations for one or more elevator cars 103 associated with the elevator system 201. It is understood that the elevator system 201 may utilize more than one elevator controller 115, and that each elevator controller 115 may control a group of elevators cars 103. Although two elevator cars 103 are shown in FIG. 2, those of skill in the art will appreciate that any number of elevators cars 103 may be employed in the elevator and building systems that employ embodiments of the present disclosure. The elevator cars 103 can be located in the same hoistway or in different hoistways so as to allow coordination amongst elevator cars 103 in different elevator banks serving different floors (e.g., sky lobbies, etc.). It is understood that the elevator system 201 may include various features as described above with reference to FIG. 1 and may also include other non-depicted elements and/or features as known in the art (e.g., drive, counterweight, safeties, etc.). Moreover, the elevator cars 103 may be employed in any configuration with all elevator cars 103 serving all floors of the structure 229, some elevator cars 103 only serving certain floors, a first group of elevator cars 103 serving lower floors of a structure 229 and a sky lobby and a second group of elevator cars 103 serving the sky lobby and upper floors of the structure 229, etc.

Also shown in FIG. 2 is a service tool 231, such as a mobile device (e.g., smart phone, smart watch, wearable technology, laptop, tablet, etc.). The service tool 231 may include a mobile and/or personal device that is typically carried by a person, such as a phone, personal digital assistance (PDA), tablet computer, laptop computer, etc. The service tool 231 is operable communicate with the elevator controller 115, where the elevator controller 115 is an example of an equipment controller and may also be referred to as equipment controller 115. There can be multiple instances of the service tool 231 and the elevator controller 115 operable to establish communication within the structure 229. For example, a first service technician may use a first instance of the service tool 231 to interface with a first instance of the elevator controller 115, while a second service technician uses a second instance of the service tool 231 to interface with a second instance of the elevator controller 115 as depicted in the example configuration of FIG. 3.

Referring to FIG. 3, the service tool 231 and the elevator controller 115 may communicate over a network 333, that may be wired or wireless. Wireless communication networks can include, but are not limited to, Wi-Fi, short-range radio (e.g., Bluetooth®), near-field infrared, cellular network, satellite, etc. In some embodiments, service tool 231 and/or the elevator controller 115 can communicate with a remote system 335, such as a maintenance computer system or cloud server operable to monitor performance of equipment systems of the structure 229 of FIG. 2 and at other locations. The remote system 335 may store files of captured data and maintenance records in a data storage system 340 for further analysis. For example, as the service tool 231 receives data from an elevator controller 115, the service tool 231 can selectively capture a plurality of state samples of one or more equipment system parameters distributed over multiple sampling times from the elevator controller 115 and store captured data in one or more files. The files can be replayed locally on the service tool 231 and/or transferred externally to the remote system 335 for storage on the data storage system 340 and subsequent analysis.

The network 333 may be any type of known communication network including, but not limited to, a wide area network (WAN), a local area network (LAN), a global network (e.g. Internet), a virtual private network (VPN), a cloud network, and an intranet. The network 333 may be implemented using a wireless network or any kind of physical network implementation known in the art. The service tools 231 and/or the remote system 335 may be coupled to the elevator controller 115 through multiple networks 333 (e.g., cellular and Internet) so that not all service tools 231 and/or the remote system 335 are coupled to the elevator controller 115 through the same network 333. One or more of the service tools 231 and the elevator controller 115 may be connected to the network 333 in a wireless fashion. In one non-limiting embodiment, the network 333 is the Internet and one or more of the service tools 231 execute a user interface application to contact the elevator controller 115 through the network 333.

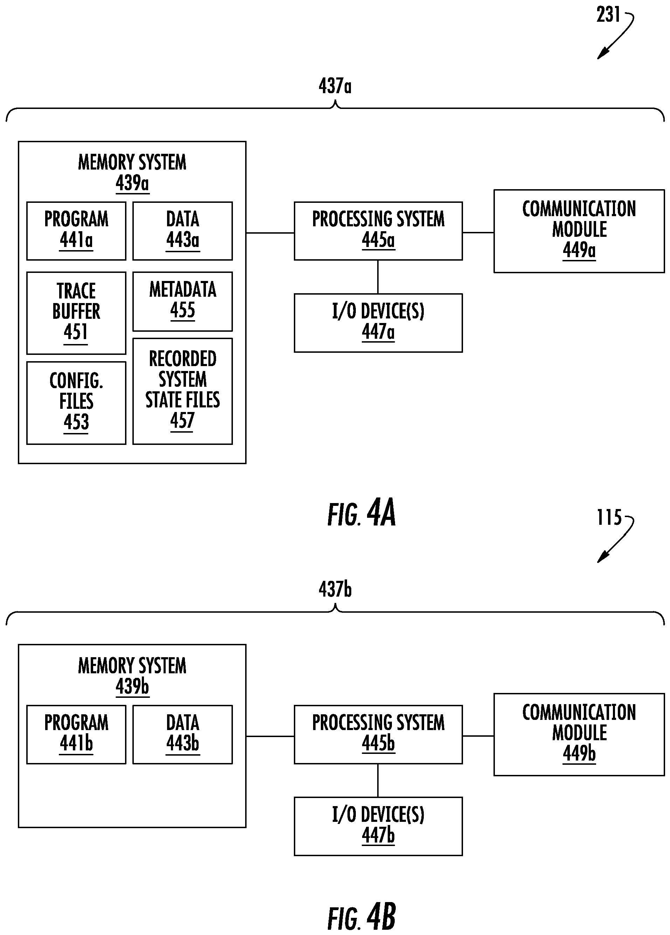

Referring now to FIGS. 4A-4B, schematic block diagram illustrations of example computing systems 437a, 437b for a service tool 231 and an elevator controller 115, respectively, are shown. The computing system 437a may be representative of computing elements or components of user devices, networked elements, mobile devices, etc. as employed in embodiments of the present disclosure. The computing system 437b may be representative of computing elements or components of controllers, elevator controller, networked elements, computers, etc. For example, the computing system 437a can be configured as part of a service tool 231 described above. The computing system 437a can be configured to operate the service tool 231, including, but not limited to, operating and controlling a touch-screen display to display various output and receive various input from a user's interaction with the touch-screen display. The computing system 437b can be configured as part of an equipment controller, e.g., elevator controller 115 described above. The computing system 437b can be a computer or other type of controller that is physically connected or remote from mechanical control of the elevator system. The computing system 437b may be connected to various elements and components within a building that are associated with operation of an elevator system or other equipment system.

As shown, the computing system 437a includes a memory system 439a which may store executable instructions and/or data. The executable instructions may be stored or organized in any manner and at any level of abstraction, such as in connection with one or more applications, apps, programs, processes, routines, procedures, methods, etc. As an example, at least a portion of the instructions are shown in FIG. 4A as being associated with a program 441a. The memory system 439a can include RAM and/or ROM and can store the program 441a thereon, wherein the program 441a may be a mobile operating system and/or mobile applications to be used on the service tool 231.

Further, the memory system 439a may store data 443a. The data 443a may include profile or application-specific data (e.g., in a service tool), a service tool identifier, or any other type(s) of data. The executable instructions stored in the memory system 439a may be executed by one or more processors of the processing system 445a which may include one or more mobile processors in the service tool 231. The processing system 445a may be operative on the data 443a and/or configured to execute the program 441a. In some embodiments, the executable instructions can be performed using a combination of the processing system 445a and remote resources (e.g., data and/or programs stored in the cloud (e.g., remote servers)).

The processing system 445a may be coupled to one or more input/output (I/O) devices 447a. In some embodiments, the I/O device(s) 447a may include one or more of a physical keyboard or keypad, a touchscreen or touch panel, a display screen, a microphone, a speaker, a mouse, a button, e.g., parts or features of a telephone or mobile device (e.g., a smartphone). For example, the I/O device(s) 447a may be configured to provide an interface to allow a user to interact with the service tool 231. In some embodiments, the I/O device(s) 447a may support a graphical user interface (GUI) and/or voice-to-text capabilities for the service tool 231.

The components of the computing system 437a may be operably and/or communicably connected by one or more buses. The computing system 437a may further include other features or components as known in the art. For example, the computing system 437a may include one or more communication modules 449a, e.g., transceivers and/or devices configured to receive information or data from sources external to the computing system 437a. In one non-limiting embodiments, the communication modules 449a of the service tool 231 can include a near-field communication chip (e.g., Bluetooth®, Wi-Fi, etc.) and a cellular data chip, as known in the art. In some embodiments, the computing system 437a may be configured to receive information over a network (wired or wireless), such as network 333 shown in FIG. 3. The information received over the network may be stored in the memory system 439a (e.g., as data 443a) and/or may be processed and/or employed by one or more programs or applications (e.g., program 441a). The processing system 445a can be any type or combination of computer processors, such as a microprocessor, microcontroller, digital signal processor, application specific integrated circuit, programmable logic device, and/or field programmable gate array. The memory system 439a can be a non-transitory computer readable storage medium tangibly embodied in the service tool 231 including executable instructions stored therein, for instance, as firmware. The communication module 449a may implement one or more communication protocols as described in further detail herein, and may include features to enable wireless communication with external and/or remote devices separate from the service tool 231.

The memory system 439a can also include a trace buffer 451, configuration files 453, metadata 455, and files 457 of recorded system state data. The trace buffer 451 is configured to capture a plurality of state samples of one or more equipment system parameters distributed over multiple sampling times from the elevator controller 115 as a plurality of captured data. The configuration file 453 may define which parameters are available or should be requested from the elevator controller 115 depending upon a subsystem under analysis (e.g., drive system parameters, braking system parameters, door control parameters, etc.), a role of the user, and other factors. The metadata 455 can include one or more system status values such as overall health indicators, position information of the elevator car 103, a user identifier, a date/time identifier, and other such supporting information beyond the values of the equipment system parameters requested for the trace buffer 451. The metadata 455 may also include static configuration information, such as software parameters, hardware and software version numbers, serial numbers, and the like. Further, the metadata 455 may include digital photos or other images of the elevator equipment. The files 457 can include captured data from the trace buffer 451 responsive to a save request. For instance, the trace buffer 451 may include a sliding window of the most recent state values of equipment system parameters from a recent time period (e.g., a most recent 15 minutes of data). Rather than recording all data values to the files 457, the recording can be limited to a user-initiated save request or an event specific trigger of a save request. The data captured in the files 457 can be limited to selected parameters at a desired time/event and may also include a copy of the metadata 455 for status/context information.

The computing systems 437a may be used to execute or perform embodiments and/or processes described herein, such as within and/or on user devices. For example, the computing system 437a of the service tool 231 enables a user interface to enable a user to make service adjustments and record state data of an elevator. To make such service requests and capture data, the service tool 231, and the computing system 437a thereof, may communicate with the computing system 437b of the elevator controller 115. It will be understood that the example of FIG. 4A is only an exemplary configuration and any desired configuration may be used.

For example, as shown in FIG. 4B, the elevator controller 115 includes a computing system 437b that is used to receive commands and/or instructions (e.g., data) from remote devices, including, but not limited to, the service tool 231. The computing system 437b is configured to control operation of and/or reservation of elevator cars 103 within one or more elevator hoistways. The computing system 437b (and program 441b stored thereon) may be configured to process requests for elevator service received from one or more user devices (e.g., service tool 231). As part of the processing, the computing system 437b may validate or authenticate the service tool 231 such that only certain service tools 231 may be able to communicate and/or make elevator service requests to the elevator controller 115. Validation, authentication, and/or other operations may be performed separately by or in combination with one or more cloud/networked devices, such as remote system 335 of FIG. 3.

As shown, the computing system 437b of the elevator controller 115 includes components similar to that shown and described with respect to the computing system 437a of FIG. 4A. As such, the computing system 437b of elevator controller 115 includes a memory system 439b with at least one program 441b and data 443b stored thereon. The data 443b may include profile or registration data (e.g., related to service tools), elevator car data, elevator control data and/or programs, or any other type(s) of data associated with control and/or operation of an elevator system. A processing system 445b may be configured to receive service requests through a communication module 449b from one or more service tools 231. The computing system 437b may further include one or more I/O devices 447b, including, but not limited to, control connections to one or more elevator mechanical controls and/or elevator cars. Further, in some configurations, the I/O devices 447b can include a monitor or display screen as part of a user interactive computing system that is associated with the elevator system and/or elevator controller 115. It will be understood that the example of FIG. 4B is only an exemplary configuration and any desired configuration may be used.

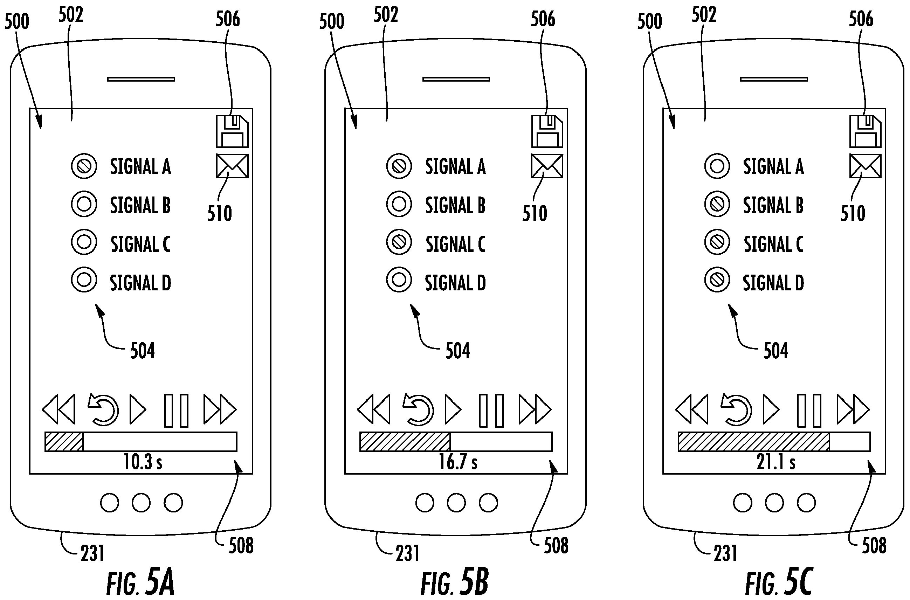

Turning now to FIGS. 5A, 5B, 5C, various illustrations of a user interface 500 implemented on a service tool 231 in accordance with an embodiment of the present disclosure are shown. As shown in FIGS. 5A-5C, a display 502 of a service tool 231 may output a user interface 500 that represents a screen or interface of an application in accordance with an embodiment of the present disclosure. The user interface 500 can enable a user to perform elevator service operations, trigger data storage, and replay stored data by operation and interaction with the user interface 500 on the display 502. That is, the user interface 500 can enable a user of the service tool 231 to communicate with an elevator controller 115 to request a data feed of one or more equipment system parameters and/or make configuration changes or otherwise command the elevator controller 115.

In the example of FIGS. 5A-5C, the one or more equipment system parameters are depicted as data values 504 having an ON state or an OFF state at particular instances in time. A save request can be triggered through a user save command 506 to transfer data values captured in the trace buffer 451 of FIG. 4A to files 457 of FIG. 4A. The save request may result in transferring values buffered the trace buffer 451 prior to the save request and future values received from the elevator controller 115 for a predetermined period of time or until a request is received to stop recording values. Thus, once the save request is received, the trace buffer 451 may be refilled/overwritten multiple times as part of saving equipment system parameters to the files 457 as part of a same capture/recording event. The user interface 500 can also include a replay interface 508 to control a replay speed of captured data. For example, data may be replayed on the user interface 500 at faster or slower rates than the data was captured and may support pausing/freezing of the data replay operation. A data transfer command 510 can be used to trigger sending one or more of the files 457 to an external system, such as the remote system 335 of FIG. 3. It will be understood that additional commands can be included (not depicted) on the user interface 500 to support service actions, configuration actions, and/or other actions.

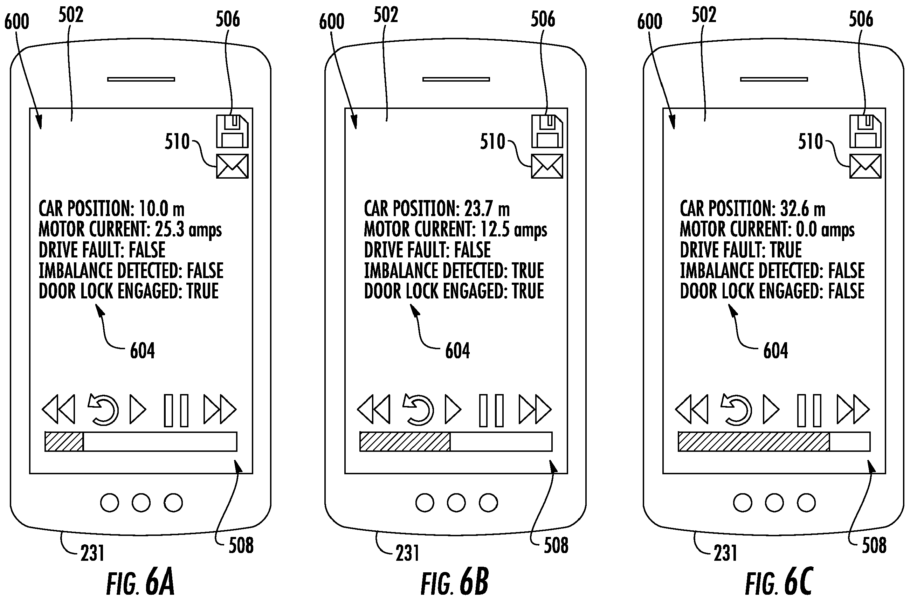

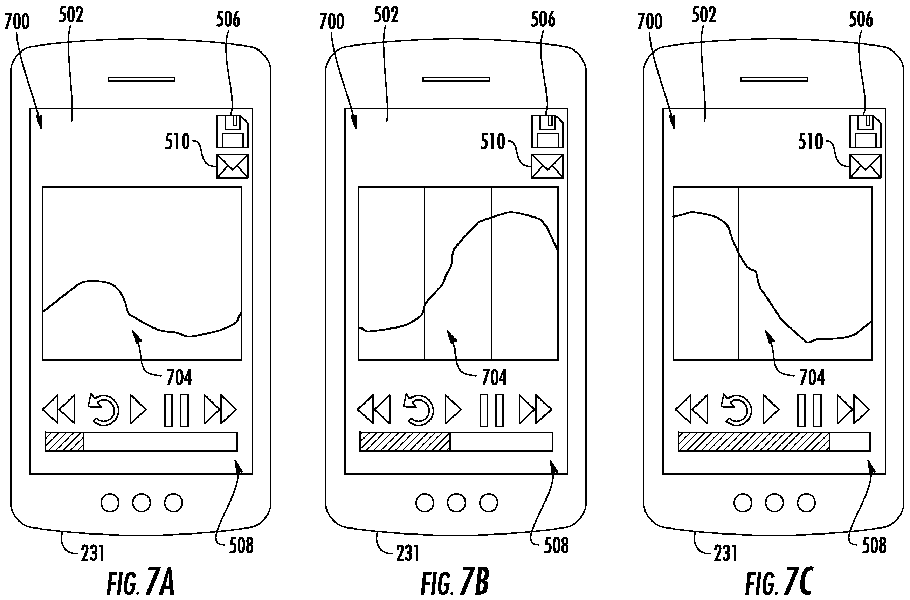

FIGS. 5A-5C further illustrate the state of equipment system parameters changing over a period of time as a recording of captured data advances. For instance, at a first time signal A is asserted in FIG. 5A, at a second time signals A and C are asserted in FIG. 5B, and at a third time signals B, C, and D are asserted as part of a same time sequence recording. FIGS. 6A, 6B, 6C illustrate another example of a captured sequence of data values 604 on user interface 600 that change between a first time in FIG. 6A, a second time in FIG. 6B, and a third time in FIG. 6C. FIGS 7A, 7B, 7C depict data plots 704 on user interface 700 that graphically depict captured data that changes between a first time in FIG. 7A, a second time in FIG. 7B, and a third time in FIG. 7C. Other variations and combinations of data value displays, plots, and other data types are contemplated. For example, data values can include samples of analog or discrete data. In some embodiments, a video feed of sequences of image data can be available to be captured and replayed.

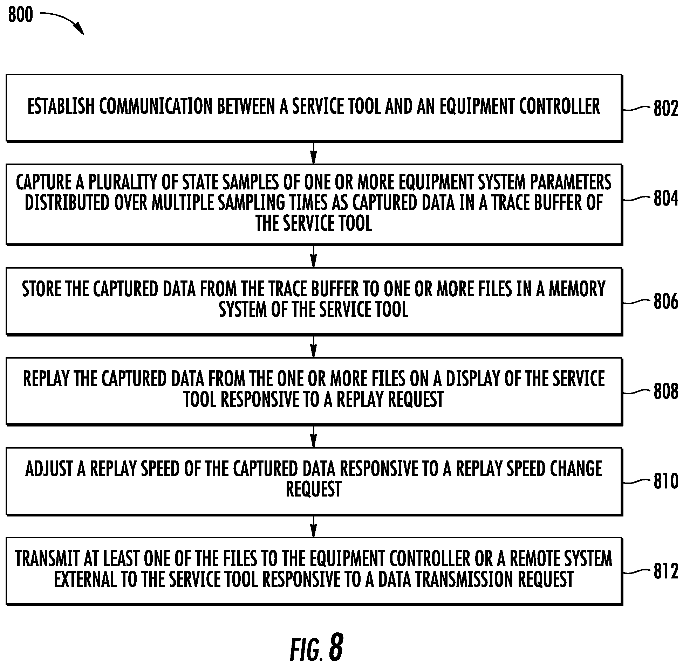

Turning now to FIG. 8, a flow process 800 in accordance with an embodiment of the present disclosure is shown. Flow process 800 may incorporate additional or alternative steps without departing from the scope of the present disclosure. The flow process 800 may be performed by processing system 445a on a service tool 231 (e.g., as described above) with various related applications and/or data stored in a memory system 439a of the service tool 231. Accordingly, flow process 800 is described in reference to FIGS. 1-8.

At block 802, communication is established between a service tool 231 and an equipment controller, such as elevator controller 115. Communication can be performed wirelessly. In some instances, the service tool 231 communicates directly with the elevator controller 115. In other instances, the service tool 231 can communicate with the elevator controller 115 and/or other systems, such as remote system 335, through network 333.

At block 804, state samples of one or more equipment system parameters distributed over multiple sampling times are captured as a plurality of captured data in a trace buffer 451 of the service tool 231. The one or more equipment system parameters can be received from the elevator controller 115 and/or other systems, e.g., through network 333. The one or more equipment system parameters can be selected based on one or more configuration files 453 and/or one or more user selections. For example, a user can select which parameters to monitor, and the service tool 231 may also request other parameters from the elevator controller 115 to support collection of metadata 455 absent a specific user request for the supporting data.

At block 806, the captured data from the trace buffer 451 is stored to one or more files 457 in a memory system 439a of the service tool 231. The storing of captured data can be performed responsive to a save request, for instance, from selection of save command 506. Metadata 455 can be added to the captured data in the one or more files 457 indicating one or more system status values. In some embodiments, data storage requirements can be reduced by determining whether a change in a data value occurred in the state samples between the sampling times, and preventing one or more of the state samples from being stored in the one or more files 457 based on determining that the data value remained unchanged between the sampling times. Thus, repetitive storing of unchanged data values observed in the trace buffer 451 can be removed in records stored to the files 457. Further, data reduction may be achieved by storing values with a slower sampling rate in the files 457 as compared to the rate that values are available in the trace buffer 451. As one example, data stored in the trace buffer 451 can be reduced by a predetermined reduction factor (e.g., reduced by a factor of ten by storing every tenth sample) when recording the data to the files 457 to reduce storage requirements. Saving data can be performed responsive to a user initiated action or based on detecting a trigger event, such as a parameter matching meeting a targeted condition or state. For example, a trigger event associated with one or more equipment system parameters can be set through a configuration file 453 or a user interface 500, 600, 700, and the save request can be initiated based on determining that the trigger event has occurred.

At block 808, the captured data is replayed from the one or more files 457 on a display 502 of the service tool 231 responsive to a replay request. At block 810, a replay speed of the captured data can be adjusted by a replay interface 508 responsive to a replay speed change request. The replay speed can be adjustable between replaying the state samples of one or more equipment system parameters at a rate slower than a sampling rate, at the sampling rate, faster than the sampling rate, and freezing a replay operation. Replaying the captured data can include outputting the state samples of one or more equipment system parameters as one or more of: a data value and a data plot, such as the examples of FIGS. 5A-7C.

At block 812, at least one of the files 457 can be transmitted external to the service tool 231 responsive to a data transmission request, such as selection of a data transfer command 510 to send one or more files 457 to the remote system 335 for further analysis and/or storage on data storage system 340.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A service tool for interfacing with an equipment system, the service tool comprising:
a processing system;
a display; and
a memory system having a plurality of instructions stored thereon that, when executed by the processing system, cause the service tool to:
establish communication with an equipment controller of the equipment system;
capture a plurality of state samples of one or more equipment system parameters distributed over multiple sampling times as a plurality of captured data in a trace buffer of the service tool;
store the captured data from the trace buffer to one or more files in the memory system of the service tool; and
replay the captured data from the one or more files on the display of the service tool responsive to a replay request.

2. The service tool of claim 1, wherein the instructions when executed by the processing system cause the service tool to:
adjust a replay speed of the captured data responsive to a replay speed change request.

3. The service tool of claim 2, wherein the replay speed is adjustable between replaying the state samples of one or more equipment system parameters at a rate slower than a sampling rate, at the sampling rate, faster than the sampling rate, and freezing a replay operation.

4. The service tool of claim 1, 2 or 3, wherein replaying the captured data comprises outputting the state samples of one or more equipment system parameters as one or more of: a data value and a data plot.

5. The service tool of any preceding claim, wherein the one or more equipment system parameters are selected based on one or more configuration files and one or more user selections.

6. The service tool of any preceding claim, wherein the instructions when executed by the processing system cause the service tool to:
add metadata to the captured data in the one or more files indicating one or more system status values.

7. The service tool of any preceding claim, wherein the instructions when executed by the processing system cause the service tool to:
transmit at least one of the files to the equipment controller or a remote system external to the service tool responsive to a data transmission request.

8. The service tool of any preceding claim, wherein the instructions when executed by the processing system cause the service tool to:
determine whether a change in a data value occurred in the state samples between the sampling times; and
prevent one or more of the state samples from being stored in the one or more files based on determining that the data value remained unchanged between the sampling times.

9. The service tool of any preceding claim, wherein the instructions when executed by the processing system cause the service tool to:
set a trigger event associated with the one or more equipment system parameter; and
initiate a save request to store the captured data based on determining that the trigger event has occurred.

10. The service tool of any preceding claim, wherein the equipment controller is an elevator controller and the service tool is a mobile device configured to communicate wirelessly with the elevator controller.

11. A method comprising:
establishing communication between a service tool and an equipment controller;
capturing a plurality of state samples of one or more equipment system parameters distributed over multiple sampling times as a plurality of captured data in a trace buffer of the service tool;
storing the captured data from the trace buffer to one or more files in a memory system of the service tool; and
replaying the captured data from the one or more files on a display of the service tool responsive to a replay request.

12. The method of claim 11, further comprising:
adding metadata to the captured data in the one or more files indicating one or more system status values.

13. The method of claim 11 or 12, further comprising:
transmitting at least one of the files to the equipment controller or a remote system external to the service tool responsive to a data transmission request.

14. The method of claim 11, 12 or 13, further comprising:
determining whether a change in a data value occurred in the state samples between the sampling times; and
preventing one or more of the state samples from being stored in the one or more files based on determining that the data value remained unchanged between the sampling times.

15. The method of any of claims 11 to 14, further comprising:
setting a trigger event associated with the one or more equipment system parameter; and
initiating a save request to store the captured data based on determining that the trigger event has occurred.
